# EUROPEAN PATENT SPECIFICATION

(11) **EP 3 812 276 B1**
(45) Date of publication and mention of the grant of the patent: **18.12.2024**
(21) Application number: 20191227.6
(22) Date of filing: 14.08.2020
(51) Int. Cl.: B64D 15/00, B64D 15/12, B64D 15/16

(54) **THIN AND LIGHT CRACK STOPPER WITH DOUBLE EXTRUSION PLIES**
DÜNNER UND LEICHTER RISSSTOPPER MIT DOPPELTEN EXTRUSIONSSCHICHTEN
BLOQUEUR DE FISSURE MINCE ET LÉGER À DOUBLE COUCHES D'EXTRUSION

(30) Priority: 25.10.2019 US 201916664162
(43) Date of publication of application: 28.04.2021
(73) Proprietor: Goodrich Corporation, Charlotte, NC 28217-4578 (US)
(72) Inventor: HU, Jin, Hudson, OH Ohio 44236 (US); SLANE, Casey, Tallmadge, OH Ohio 44278 (US); CHING, Nathaniel, Hartville, OH Ohio 44632 (US)
(74) Representative: Dehns

(56) References cited:
- EP-A1- 3 098 167
- WO-A2-2010/129234
- US-A- 4 613 102
- US-A1- 2009 039 200

## Description

### FIELD

The present disclosure relates to deicers and, more particularly, to deicers with relatively thin and light outer layers.

### BACKGROUND

Conventional pneumatic deicers include a rubber surface ply which has a tendency to experience surface cracks. Such surface cracks may result from prolonged exposure to rain, ice, and debris impact, or by polymer degradation due to hydrolysis, ultraviolet radiation, ozone damage, or by repeated exposure to relatively low temperatures. The cracks may propagate laterally and vertically deep into an underlying rubber layer used to seal a fabric body. In response to the cracks reaching the fabric body, the pneumatic deicer may experience tubing inflation malfunctions. EP3098167 A1 discloses a method for forming a deicer according to the preamble of claim 1. US 2009/039200 A1 discloses an alternative method for forming a deicer.

### SUMMARY

According to a first aspect, there is provided a method for forming a deicer according to claim 1.

In any of the foregoing embodiments, each of the first outer layer and the second outer layer are formed to have a thickness of between 2 thousandths of an inch (0.051 millimeters (mm)) and 40 thousandths of an inch (1.0 mm).

In any of the foregoing embodiments, each of the first outer layer and the second outer layer are formed to have the thickness of between 3 thousandths of an inch (0.076 mm) and 7 thousandths of an inch (0.18 mm).

In any of the foregoing embodiments, each of the first outer layer and the second outer layer are formed using a same material.

In any of the foregoing embodiments, the deicer is a pneumatic deicer and the body is configured to receive a gas to inflate the deicer.

In any of the foregoing embodiments, the deicer is an electrothermal deicer and the body is configured to receive electricity and convert the electricity into thermal energy.

In any of the foregoing embodiments, the outer layer includes an aliphatic polyether urethane.

In any of the foregoing embodiments, the deicer includes at least one of a pneumatic deicer and the body is configured to receive a gas to inflate the deicer; or an electrothermal deicer and the body is configured to receive electricity and convert the electricity into thermal energy.

According to a second aspect, there is provided a deicer configured for use in an aircraft according to claim 8.

In any of the foregoing embodiments, each of the first outer layer and the second outer layer are formed from a same material, and formed to have a thickness of between 2 thousandths of an inch (0.051 millimeters (mm)) and 40 thousandths of an inch (1.0 mm).

In any of the foregoing embodiments, the deicer includes at least one of: a pneumatic deicer and the body is configured to receive a gas to inflate the deicer; or an electrothermal deicer and the body is configured to receive electricity and convert the electricity into thermal energy.

The foregoing features and elements may be combined in various combinations without exclusivity, unless expressly indicated otherwise. These features and elements as well as the operation thereof will become more apparent in light of the following description and the accompanying drawings. It should be understood, however, the following description and drawings are intended to be exemplary in nature and non-limiting.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft including various components having an elastomeric outer layer, in accordance with various embodiments;
FIG. 2 is an example of a flowchart illustrating a method for forming an aircraft component with an inner portion and an outer layer;
FIG. 3A illustrates an example of an aircraft component with an inner portion and an outer layer;
FIG. 3B illustrates an aircraft component with an inner portion and an outer layer having multiple plies, in accordance with the present invention;
FIG. 4 illustrates a method for forming a deicer for use with an aircraft component, according to various embodiments;
FIG. 5 illustrates a pneumatic deicer for use with an aircraft component, according to various embodiments; and
FIG. 6 illustrates an electrothermal deicer for use with an aircraft component, according to various embodiments.

### DETAILED DESCRIPTION

The detailed description of exemplary embodiments herein makes reference to the accompanying drawings, which show exemplary embodiments by way of illustration.

Any reference to attached, fixed, connected or the like may include permanent, removable, temporary, partial, full and/or any other possible attachment option. Additionally, any reference to without contact (or similar phrases) may also include reduced contact or minimal contact. Surface shading lines may be used throughout the figures to denote different parts but not necessarily to denote the same or different materials.

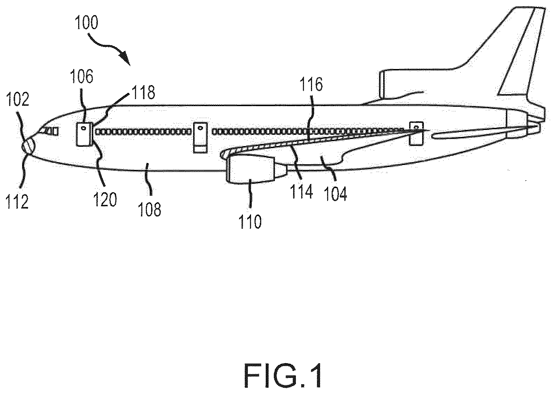

Referring now to FIG. 1, an aircraft 100 may include multiple aircraft components. For example, the aircraft 100 may include a nosecone 102, one or more wing 104, one or more door 106, a fuselage 108, and one or more gas turbine engine 110. These and other components of the aircraft 100 may include, or be coupled to, additional aircraft components. For example, the nosecone 102 may include an erosion film 112 on an outer surface thereof, the wing 104 may have a leading edge 114 with a pneumatic or electrothermal deicer 116, and the door 106 may have a seal 118 formed from a heated elastomer product 120. Each of the erosion film 112, the pneumatic or electrothermal deicer 116, and the heated elastomer product 120 may have an inner portion which may face an interior of the component (e.g., the inner portion of the erosion film 112 may face the nosecone 102, the inner portion of the pneumatic or electrothermal deicer 116 may face the wing 104, and the inner portion of the heated elastomer product 120 may face the door 106 or the fuselage 108). Each of the erosion film 112, the pneumatic or electrothermal deicer 116, and the heated elastomer product 120 may further include an outer layer. The outer layer may be formed from, or may include, an elastomeric material and may be formed using an extrusion process. In various embodiments, the outer layer may face an environment of the aircraft component. For example, the outer portion of the erosion film may face oncoming air, the outer portion of the electrothermal deicer 116 may face oncoming air, and the outer portion of the heated elastomer product 120 may face air in response to the door 106 being opened.

Using extrusion to form an elastomeric outer layer may provide several benefits and advantages over forming an elastomeric outer layer using a conventional method. For example, the use of extrusion allows the outer layer to be relatively thin, thus reducing weight of the aircraft component. Because extrusion allows for the formation of thinner layers, multiple layers may be stacked together to form a desired thickness of the total outer layer. The ability to stack multiple layers together provides benefits such as reducing the likelihood of defects (e.g., cracks, pores, or the like) extending through the outer layer, and simultaneously increasing the likelihood of uniformity of thickness of the outer layer. Thus, the use of extrusion results in a more robust product with an extended operating life and potentially having a lower weight, all desirable characteristics for aircraft components.

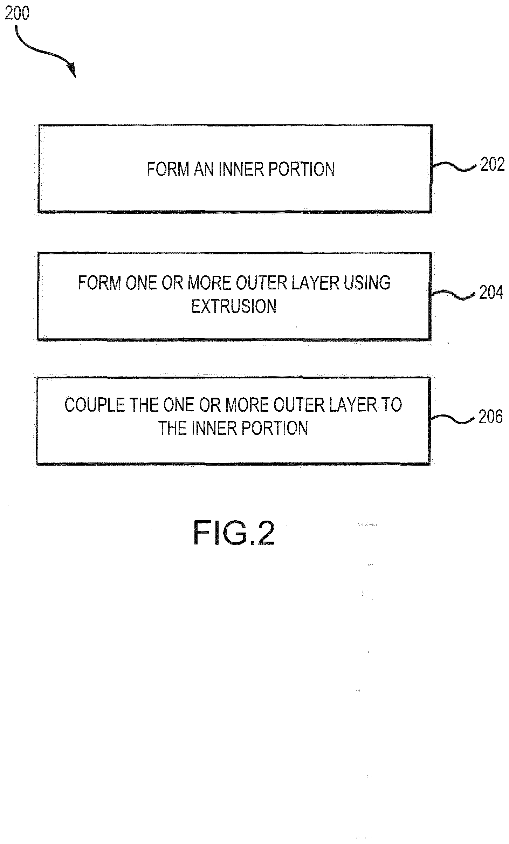

Turning to FIG. 2, an example of a method 200 for forming an aircraft component having an elastomeric surface or erosion ply is shown. The method 200 may begin in block 202 where an inner portion of the aircraft component is formed. The inner portion of the aircraft component may be formed using any method such as casting, forging, or the like. The inner portion may be formed to have any desirable shape including straight lines, angles, curves, or the like on at least one of edges or surfaces. The inner portion may include at least one of an adhesive, an elastomer, a rubber, a neoprene, a metal, or a woven fabric.

In block 204, two (or more) outer layers are formed using an extrusion process. The outer layer includes an elastomeric material and includes multiple plies (i.e., multiple outer layers) coupled together. Each of the multiple plies is formed using the extrusion process. The extrusion process may include any type of extrusion such as blown extrusion or cast extrusion. The outer layer (whether one or multiple plies) may be formed to have a shape that corresponds to a shape of an outer surface of the inner portion. In some examples, the outer layer may be formed via extrusion into a sheet structure and cut or otherwise reduced to a desired shape, or may be formed via extrusion to have a desired shape of the final outer layer.

Blown extrusion, which may be referred to as blown film extrusion, is a process of extrusion of molten materials and constant inflation of the material to several times its initial diameter. This may result in a thin, tubular product which may be slit to create a flat film. The extrusion may be done via an annular slit die, generally vertically, for the formation of a thin-walled tube. The introduction of air takes place through a hole present in the die's center for blowing up the tube just like a balloon. The cooling of the hot film is done by the high-speed air ring that blows onto it. This air ring is mounted on the top of die.

Cast extrusion includes a molten polymer that travels through a flat die system to adopt its final flat film shape. The die system is formed by the die and feedblock (if the process requires coextrusion) or simply the die, if the process is that of mono-layer extrusion. The process starts with the feeding of plastic resins by means of a gravimetric feeding system to one or more extruders. The materials are then melted and mixed by the extruders, filtered and fed to the die system. Immediately after exiting the die, the molten curtain enters the cooling unit where its temperature is lowered with a water-cooled chill roll to "freeze" the film. The film is then passed downstream where the edges are trimmed, corona treatment is applied (if a fabrication process such as printing or coating is required) and the film is wound into rolls.

In block 206, the one or more outer layer may be coupled to the inner portion. The one or more outer layer may be coupled to the inner portion using any technique such as adhesive, fasteners, an interference or press fit, or the like.

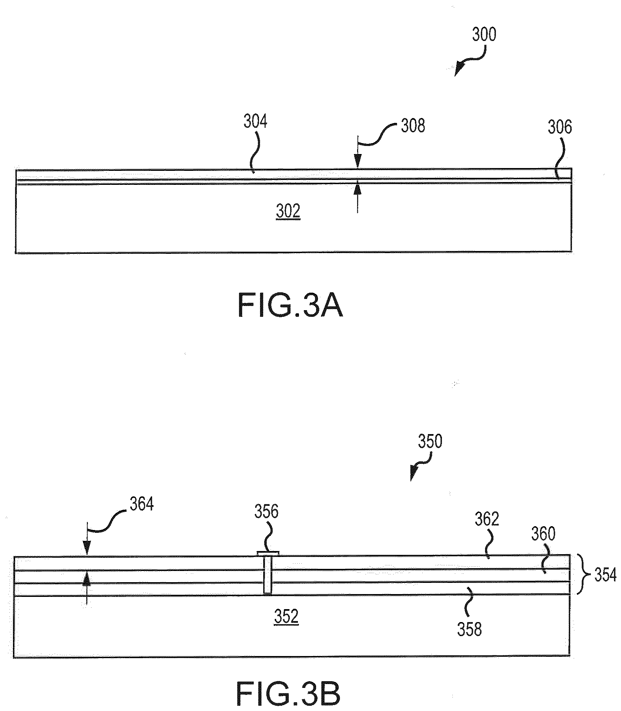

Referring to FIG. 3A, an example which is not according to the invention, an aircraft component 300 may include an inner portion 302 and an outer layer 304. An adhesive 306 may be applied between the inner portion 302 and the outer layer 304 and used to couple the outer layer 304 to the inner portion 302. In that regard, the adhesive 306 resists separation of the outer layer 304 from the inner portion 302. The adhesive may be heat-cured, chemically-cured, moisture-cured, anaerobic-cured, or the like.

The outer layer 304 may be formed using an extrusion process. In that regard, the outer layer 304 may be formed to have a relatively small thickness 308. For example, the total thickness of the outer layer 304 may be between 1 thousandths of an inch and 100 thousandths of an inch (0.025 millimeters (mm) and 2.5 mm), between 2 thousandths of an inch and 40 thousandths of an inch (0.051 mm and 1.0 mm), or between 2 thousandths of an inch and 20 thousandths of an inch (0.051 mm and 0.51 mm).

The outer layer 304 may include a single ply. The material of the outer layer 304 may include any elastomeric material. For example, the outer layer 304 may include a natural rubber, a synthetic rubber, a silicone, an elastomer, a thermoplastic, a thermoset, a polymeric material, or the like.

Use of the extrusion process results in the outer layer 304 being resistant to a relatively wide range of temperatures. Stated differently, use of the extrusion process results in the outer layer 304 retaining its physical properties in response to being exposed to a relatively wide range of temperatures. For example, the outer layer 304 may be capable of retaining its physical properties in response to being exposed to temperatures between negative one hundred (-100) degrees Fahrenheit (F) and 350 degrees F (-73.3 degrees Celsius (C) and 177 degrees C), between -70 degrees F and 250 degrees F (-57 degrees C and 120 degrees C), or between -50 degrees F and 200 degrees F (-46 degrees C and 93 degrees C).

Turning to FIG. 3B, an example which is not according to the invention, another aircraft component 350 may include an inner portion 352, an outer layer 354, and one or more fasteners 356. Whereas the outer layer 304 of FIG. 3A includes a single ply, the outer layer 354 of FIG. 3B includes multiple plies, or multiple outer layers. In particular, the outer layer 354 includes a first outer layer 358, a second outer layer 360, and a third outer layer 362 stacked on top of each other. The fastener 356 may extend through each of the outer layers 358, 360, 362 and a portion of the inner portion 352 and may fasten each of the outer layers 358, 360, 362 the inner portion 352 together. In various examples, an adhesive may be used in addition to, or instead of, the fastener 356 to couple each of the outer layers 358, 360, 362 together.

Each of the outer layers 358, 360 is formed using an extrusion process, and may have the same or different thicknesses. The third outer layer 362, if present, may be formed using an extrusion process. Each of the outer layers 358, 360, 362 may be formed separately or at the same time using the extrusion process. In some embodiments, a single sheet of outer layer may be formed and may be cut into each of the outer layers 358, 360, 362. In various embodiments, each of the outer layers 358, 360, 362 may be formed as separate parts. In various embodiments, each of the outer layers 358, 360, 362 may be formed from the same or different materials. For example, each of the outer layers 358, 360, 362 may include a natural rubber, or the outer layers 358, 360 may include a natural rubber and the outer layer 362 may include an elastomer. Each of the outer layers 358, 360 may include any one or more of a natural rubber, a synthetic rubber, a silicone, an elastomer, a thermoplastic, a thermoset, a polymeric material, or the like.

Use of the extrusion process allows each of the outer layers 358, 360, 362 to have a relatively small thickness. For example, a thickness 364 of the each of the outer layers 358, 360, 362 may be between 1 thousandths of an inch and 100 thousandths of an inch (0.025 millimeters (mm) and 2.5 mm), between 2 thousandths of an inch and 40 thousandths of an inch (0.051 mm and 1.0 mm), or between 2 thousandths of an inch and 20 thousandths of an inch (0.051 mm and 0.51 mm). Additional outer layers may be added in order to achieve a desired thickness of the combined outer layer 354. Because of the separate outer layers 358, 360, 362, a defect in one of the outer layers (e.g., 358) is limited to that layer, and thus the defect is unlikely to extend through the entire outer layer (including the combination of outer layers 358, 360, 362).

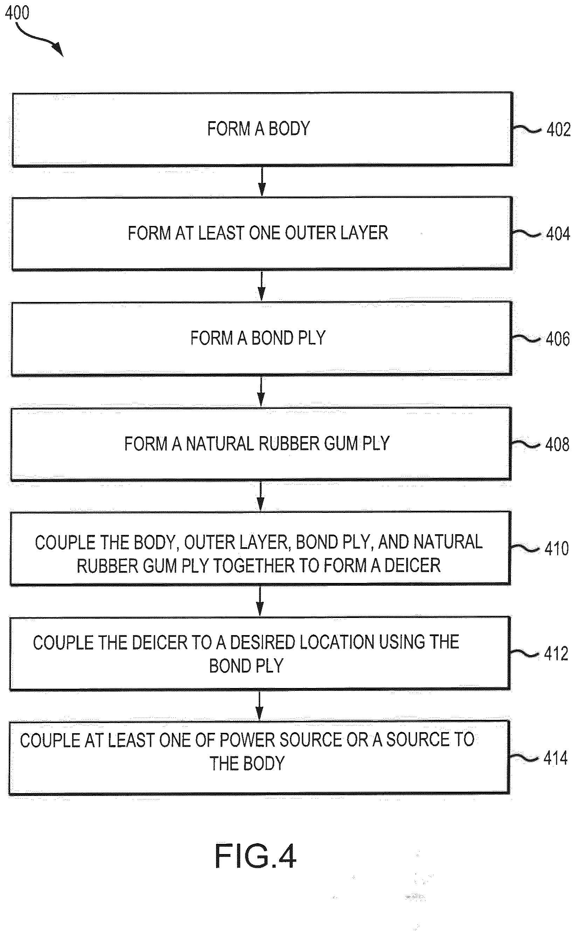

Referring now to FIG. 4, a method 400 for forming a deicer having an elastomeric surface or erosion ply is shown. The method 400 may begin in block 402 where a body of the deicer is formed. The body, which may also be referred to as a carcass, may be formed using any method such as casting, forging, weaving, sewing, or the like. In various embodiments, the body may be designed to receive a fluid or gas and to inflate in response to receiving such fluid or gas. In that regard, the deicer may be a pneumatic deicer. In various embodiments, the body may be conductive and designed to convert electricity into thermal energy. In that regard, the deicer may be an electrothermal deicer.

The body may include any material such as an elastomeric material (e.g., a neoprene, an elastomer, or the like), a fabric material, or the like.

In block 404, at least one outer layer may be formed using an extrusion process. The outer layer may include an elastomeric material such as a natural rubber, an elastomer, a plastic, a neoprene, a urethane, or the like. In various embodiments, the outer layer may include an aliphatic polyether urethane with a relatively low glass transition temperature (Tg) and a relatively great resistance to ultraviolet light, ozone, and hydrolysis. In various embodiments, the outer layer may include one, two, or more plies coupled together. Each of the plies is formed using the extrusion process. The extrusion process may include any type of extrusion such as blown extrusion or cast extrusion. The outer layer or layers may be formed to have a shape that corresponds to a shape of the body. In various embodiments, the outer layers may be formed via extrusion into a sheet structure and then cut or otherwise reduced to a desired shape, or may be formed via extrusion to have a desired shape of the final outer layer.

In block 406, a bond ply is formed. The bond ply may be formed using any technique and includes any adhesive usable to couple, attached, or fasten the deicer to an aircraft component, such as a wing, nosecone, propeller blade, or the like. In various embodiments, the deicer may be coupled to the aircraft component using a liquid adhesive such that the bond ply is not separately formed. In various embodiments, the bond ply may further include an elastomeric material such as a natural rubber, a neoprene, a urethane, or the like.

In block 408, a natural rubber gum ply is formed. The natural rubber gum ply may be formed using any technique and may include a natural rubber. In various embodiments, the natural rubber gum ply may include another elastomer such as a neoprene, a urethane, or the like.

In various embodiments, the bond ply and the natural rubber gum ply may seal the body. For example, the body may be formed from a fabric material, and the bond ply and the natural rubber gum ply may, together with the body, form an airtight compartment for receiving a gas. In that regard, a separate adhesive may be used to couple the bond ply to the aircraft component.

In block 410, the body, outer layer, bond ply, and natural rubber gum ply are coupled together to form a deicer. These elements may be coupled together using any technique such as fasteners, one or more adhesive, or the like.

In block 412, the deicer may be coupled to a desired location on an aircraft component. For example, the bond ply may be bonded to the desired location in order to fasten the deicer to the desired location on the component.

In block 414, at least one of a power source or a gas source may be coupled to the body. In embodiments in which the deicer is a pneumatic deicer, a gas source may be coupled to the body such that the gas source may provide gas to the body in order to inflate the body. In response to inflation of the body, any ice on the deicer may become cracked and removed from the deicer. In embodiments in which the deicer is an electrothermal deicer, a power source may be coupled to the body such that the power source may provide electricity to the body. In response to receiving the electricity, the deicer may convert the electricity into thermal energy which may in turn melt any ice located on the deicer.

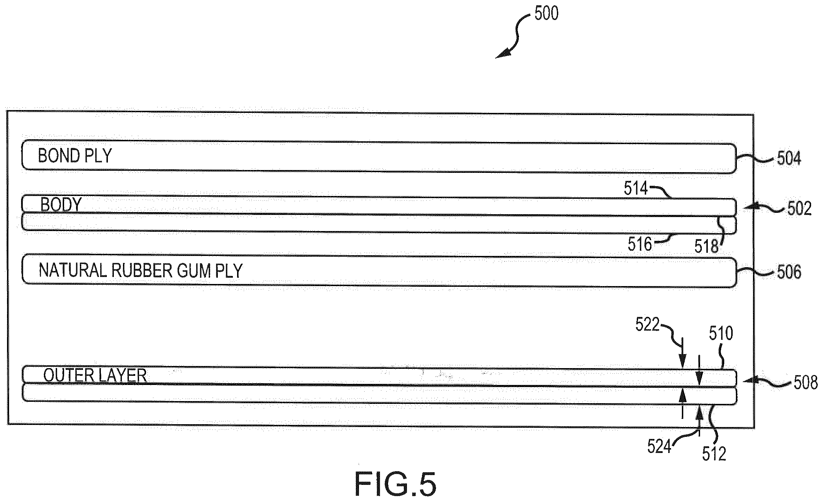

Referring now to FIG. 5, a pneumatic deicer 500 may be used as a deicer on an aircraft. The pneumatic deicer 500 may be formed using a method similar to the method 400 of FIG. 4. The deicer 500 may include a body 502, a bond ply 504, a natural rubber gum ply 506, and an outer layer 508.

The body 502 may include a first portion 514, a second portion 516, and a volume 518 therebetween. The volume 518 may be coupled to a gas source 506 such that the volume 518 may receive a gas from the gas source 506. In response to receiving the gas, the body 502 may expand, thus shattering and removing any ice located on the deicer 500.

The bond ply 504 may include any adhesive or other material. The bond ply 504 may be coupled to an aircraft component, such as the nosecone 102 of FIG. 1, in order to couple the deicer 500 to the aircraft component.

The natural rubber gum ply 506 may include a natural rubber or other elastomer. The natural rubber gum ply 506 may be oriented such that the body 502 is located between the natural rubber gum ply 506 and the bond ply 504.

In various embodiments, the body 502 may be formed from a porous material, such as a fabric. In that regard, the bond ply 504 and the natural rubber gum ply 506 may seal the cavity 518 within the body 502, thus reducing the likelihood of leakage of the gas from the body 502. In that regard, the bond ply 504 and the natural rubber gum ply 506 may be or may include nonporous materials capable of forming an airtight seal.

The outer layer 508 includes a first ply 510 and a second ply 512. The first ply 510 and the second ply 512 are each formed using extrusion. In various embodiments, the first ply 510 and the second ply 512 may be laminated together to form the outer layer 508. Use of two plies provides various benefits and advantages. For example, any defect in the first ply 510 or the second ply 512 is unlikely to extend through the other of the first ply 510 or the second ply 512. Additionally, if a crack forms in the second ply 512, then the first ply 510 will act as a crack stopper to reduce the likelihood of the crack extending into the body 502 and thus reducing the efficacy of the deicer 500.

The first ply 510 may have a first thickness 522, and the second ply 512 may have a second thickness 524. The first thickness 522 and the second thickness 524 may be the same or different. In various embodiments, the first thickness 522 and the second thickness 524 may be between 1 thousandths of an inch and 100 thousandths of an inch (0.025 mm and 2.5 mm), between 2 thousandths of an inch and 40 thousandths of an inch (0.051 mm and 1.0 mm), or between three thousandths of an inch and seven thousandths of an inch (0.076 mm and 0.18 mm).

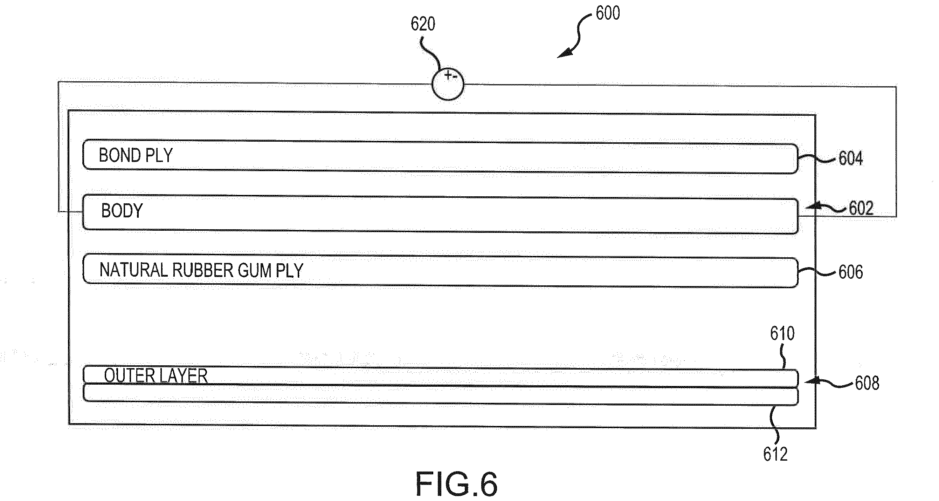

Referring now to FIG. 6, an electrothermal deicer 600 is shown. The electrothermal deicer 600 may have similar features as the pneumatic deicer 500 of FIG. 5. In particular, the electrothermal deicer 600 includes a body 602, a bond ply 604, a natural rubber gum ply 606, and an outer layer 608. The bond ply 604, natural rubber gum ply 606, and outer layer 608 may be the same as, or similar to, the corresponding layers in the pneumatic deicer 500 of FIG. 5.

The body 602 may be formed from a conductive material, such as a metal, and may convert electricity into thermal energy (i.e., heat). In that regard, a power source 620 may be coupled to the body 602 and may provide a voltage or current to the body 602. In response to receiving the voltage or current, the body 602 may generate thermal energy. In response to thermal energy being generated by the body, any ice located on the electrothermal deicer 600 may melt.

The scope of the disclosure is to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method (200;400) for forming a deicer (116), the method comprising:
forming (202;402) a body (302;502;602) of the deicer;
forming (204;404) an outer layer (304;354;508;608) of the deicer through extrusion of an elastomeric material; the method **characterized in that** forming the outer layer of the deicer includes forming a first outer layer (358) using the extrusion, forming a second outer layer (360) using the extrusion, and coupling the first outer layer to the second outer layer;
forming (408) a natural rubber gum ply (506;606);
forming (406) a bond ply (504;604);
coupling (206;410) the outer layer of the deicer to the body of the deicer, wherein coupling the outer layer of the deicer to the body of the deicer further includes coupling the natural rubber gum ply to the outer layer of the deicer and to the body of the deicer such that the natural rubber gum ply is located between the outer layer and the body; and
coupling the bond ply to the body such that the body is located between the bond ply and the natural rubber gum ply,
wherein the bond ply further comprises an adhesive configured to couple the bond ply to an aircraft component, wherein the bond ply is further configured to couple the deicer to the aircraft component.

2. The method of claim 1, wherein each of the first outer layer and the second outer layer are formed to have a thickness of between 2 thousandths of an inch (0.051 millimeters (mm)) and 40 thousandths of an inch (1.0 mm).

3. The method of claim 2, wherein each of the first outer layer and the second outer layer are formed to have the thickness of between 3 thousandths of an inch (0.076 mm) and 7 thousandths of an inch (0.18 mm).

4. The method of claim 1, 2, or 3, wherein each of the first outer layer and the second outer layer are formed using a same material.

5. The method of any preceding claim, wherein the deicer is a pneumatic deicer and the body is configured to receive a gas to inflate the deicer.

6. The method of any of claims 1 to 4, wherein the deicer is an electrothermal deicer and the body is configured to receive electricity and convert the electricity into thermal energy.

7. The method of any preceding claim, wherein the outer layer includes an aliphatic polyether urethane.

8. A deicer (116) configured for use in an aircraft (100), the deicer comprising:
a body (302;502;602); and
an outer layer (304;354;508;608) coupled to the body; wherein the outer layer has a first outer layer and a second outer layer coupled together, each of the first outer layer and the second outer layer being formed using an extrusion process;
a natural rubber gum ply (506;606) located between the body and the outer layer; and
a bond ply (504;604);
wherein the natural rubber gum ply is coupled to the outer layer of the deicer and to the body of the deicer such that the natural rubber gum ply is located between the outer layer and the body;
wherein the bond ply is coupled to the body such that the body is located between the bond ply and the natural rubber gum ply, and
wherein the bond ply further comprises an adhesive configured to couple the bond ply to an aircraft component, wherein the bond ply is further configured to couple the deicer to the aircraft component.

9. The deicer of claim 8, wherein each of the first outer layer and the second outer layer are formed from a same material, and formed to have a thickness of between 2 thousandths of an inch (0.051 millimeters (mm)) and 40 thousandths of an inch (1.0 mm).

10. The deicer of claim 8 or 9, wherein the deicer includes at least one of:
a pneumatic deicer and the body is configured to receive a gas to inflate the deicer; or
an electrothermal deicer and the body is configured to receive electricity and convert the electricity into thermal energy.

## Patentansprüche

1. Verfahren (200;400) zum Bilden eines Enteisers (116), wobei das Verfahren Folgendes umfasst:
Bilden (202; 402) eines Körpers (302; 502; 602) des Enteisers;
Bilden (204;404) einer Außenschicht (304;354;508;608) des Enteisers durch Extrusion eines elastomeren Materials; wobei das Verfahren **dadurch gekennzeichnet ist, dass** das Bilden der Außenschicht des Enteisers Bilden einer ersten Außenschicht (358) unter Verwendung der Extrusion, Bilden einer zweiten Außenschicht (360) unter Verwendung der Extrusion und Koppeln der ersten Außenschicht an die zweite Außenschicht beinhaltet;
Bilden (408) einer Lage (506; 606) aus Naturkautschuk;
Bilden (406) einer Verbindungslage (504; 604);
Koppeln (206; 410) der Außenschicht des Enteisers an den Körper des Enteisers, wobei das Koppeln der Außenschicht des Enteisers an den Körper des Enteisers ferner Koppeln der Lage aus Naturkautschuk an die Außenschicht des Enteisers und an den Körper des Enteisers beinhaltet, sodass sich die Lage aus Naturkautschuk zwischen der Außenschicht und dem Körper befindet; und
Koppeln der Verbindungslage an den Körper, sodass sich der Körper zwischen der Verbindungslage und der Lage aus Naturkautschuk befindet,
wobei die Verbindungslage ferner einen Klebstoff umfasst, der zum Koppeln der Verbindungslage an eine Luftfahrzeugkomponente ausgelegt ist, wobei die Verbindungslage ferner zum Koppeln des Enteisers an die Luftfahrzeugkomponente ausgelegt ist.

2. Verfahren nach Anspruch 1, wobei jede der ersten Außenschicht und der zweiten Außenschicht derart gebildet wird, dass eine Dicke zwischen 2 Tausendstel Zoll (0,051 Millimeter (mm)) und 40 Tausendstel Zoll (1,0 mm) beträgt.

3. Verfahren nach Anspruch 2, wobei jede der ersten Außenschicht und der zweiten Außenschicht derart gebildet wird, dass die Dicke zwischen 3 Tausendstel Zoll (0,076 mm) und 7 Tausendstel Zoll (0,18 mm) beträgt.

4. Verfahren nach Anspruch 1, 2 oder 3, wobei jede der ersten Außenschicht und der zweiten Außenschicht unter Verwendung eines gleichen Materials gebildet wird.

5. Verfahren nach einem der vorhergehenden Ansprüche, wobei es sich bei dem Enteiser um einen pneumatischen Enteiser handelt und der Körper zum Aufnehmen eines Gases zum Aufblähen des Enteisers ausgelegt ist.

6. Verfahren nach einem der Ansprüche 1 bis 4, wobei es sich bei dem Enteiser um einen elektrothermischen Enteiser handelt und der Körper zum Aufnehmen von Strom und Umwandeln des Stroms in Wärmeenergie ausgelegt ist.

7. Verfahren nach einem der vorhergehenden Ansprüche, wobei die Außenschicht ein aliphatisches Polyetherurethan beinhaltet.

8. Enteiser (116), der zur Verwendung in einem Luftfahrzeug (100) ausgelegt ist, wobei der Enteiser Folgendes umfasst:
einen Körper (302; 502; 602); und
eine Außenschicht (304; 354; 508; 608), die an den Körper gekoppelt ist; wobei die Außenschicht eine erste Außenschicht und eine zweite Außenschicht aufweist, die aneinander gekoppelt sind, wobei jede der ersten Außenschicht und der zweiten Außenschicht unter Verwendung eines Extrusionsprozesses gebildet ist;
eine Lage (506; 606) aus Naturkautschuk, die sich zwischen dem Körper und der Außenschicht befindet; und
eine Verbindungslage (504; 604);
wobei die Lage aus Naturkautschukgummi an die Außenschicht des Enteisers und an den Körper des Enteisers gekoppelt ist, sodass sich die Lage aus Naturkautschukgummi zwischen der Außenschicht und dem Körper befindet;
wobei die Verbindungslage an den Körper gekoppelt ist, sodass sich der Körper zwischen der Verbindungslage und der Lage aus Naturkautschuk befindet, und
wobei die Verbindungslage ferner einen Klebstoff umfasst, der zum Koppeln der Verbindungslage an eine Luftfahrzeugkomponente ausgelegt ist, wobei die Verbindungslage ferner zum Koppeln des Enteisers an die Luftfahrzeugkomponente ausgelegt ist.

9. Enteiser nach Anspruch 8, wobei jede der ersten Außenschicht und der zweiten Außenschicht aus einem gleichen Material gebildet ist und derart gebildet ist, dass eine Dicke zwischen 2 Tausendstel Zoll (0,051 Millimeter (mm)) und 40 Tausendstel Zoll (1,0 mm) beträgt.

10. Enteiser nach Anspruch 8 oder 9, wobei der Enteiser mindestens eines der Folgenden beinhaltet:
einen pneumatischen Enteiser und der Körper ist zum Aufnehmen eines Gases zum Aufblähen des Enteisers ausgelegt; oder
einen elektrothermischen Enteiser und der Körper ist zum Aufnehmen von Strom und Umwandeln des Stroms in Wärmeenergie ausgelegt.

## Revendications

1. Procédé (200 ; 400) de formation d'un dégivreur (116), le procédé comprenant :
la formation (202 ; 402) d'un corps (302 ; 502 ; 602) du dégivreur ;
la formation (204 ; 404) d'un revêtement externe (304 ; 354 ; 508 ; 608) du dégivreur par extrusion d'un matériau élastomère ; le procédé étant **caractérisé en ce que** la formation du revêtement externe du dégivreur comprend la formation d'un premier revêtement externe (358) au moyen de l'extrusion, la formation d'un second revêtement externe (360) au moyen de l'extrusion, et le couplage du premier revêtement externe au second revêtement externe ;
la formation (408) d'une couche de gomme de caoutchouc naturelle (506 ; 606) ;
la formation (406) d'une couche de liaison (504 ; 604) ;
le couplage (206 ; 410) du revêtement externe du dégivreur au corps du dégivreur, le couplage du revêtement externe du dégivreur au corps du dégivreur comprenant en outre le couplage de la couche de gomme de caoutchouc naturelle au revêtement externe du dégivreur et au corps du dégivreur de telle sorte que la couche de gomme de caoutchouc naturelle soit située entre le revêtement externe et le corps ; et
le couplage de la couche de liaison au corps de telle sorte que le corps soit situé entre la couche de liaison et la couche de gomme de caoutchouc naturelle,
dans lequel la couche de liaison comprend également un adhésif configuré pour coupler la couche de liaison à un composant d'aéronef, la couche de liaison étant également configurée pour coupler le dégivreur au composant d'aéronef.

2. Procédé selon la revendication 1, dans lequel chacun du premier revêtement externe et du second revêtement externe est formé pour avoir une épaisseur comprise entre 2 millièmes de pouce (0,051 millimètre (mm)) et 40 millièmes de pouce (1,0 mm).

3. Procédé selon la revendication 2, dans lequel chacun du premier revêtement externe et du second revêtement externe est formé pour avoir l'épaisseur comprise entre 3 millièmes de pouce (0,076 mm) et 7 millièmes de pouce (0,18 mm).

4. Procédé selon la revendication 1, 2 ou 3, dans lequel chacun du premier revêtement externe et du second revêtement externe est formé en utilisant un même matériau.

5. Procédé selon une quelconque revendication précédente, dans lequel le dégivreur est un dégivreur pneumatique et le corps est configuré pour recevoir un gaz pour gonfler le dégivreur.

6. Procédé selon l'une quelconque des revendications 1 à 4, dans lequel le dégivreur est un dégivreur électrothermique et le corps est configuré pour recevoir de l'électricité et convertir l'électricité en énergie thermique.

7. Procédé selon une quelconque revendication précédente, dans lequel le revêtement externe comprend un polyéther uréthane aliphatique.

8. Dégivreur (116) configuré pour être utilisé dans un aéronef (100), le dégivreur comprenant :
un corps (302 ; 502 ; 602) ; et
un revêtement externe (304 ; 354 ; 508 ; 608) couplé au corps ;
dans lequel le revêtement externe comporte un premier revêtement externe et un second revêtement externe couplés ensemble, chacun du premier revêtement externe et du second revêtement externe étant formé au moyen d'un procédé d'extrusion ;
une couche de gomme de caoutchouc naturelle (506 ; 606) située entre le corps et le revêtement externe ; et
une couche de liaison (504 ; 604) ;
dans lequel la couche de gomme de caoutchouc naturelle est couplée au revêtement externe du dégivreur et au corps du dégivreur de telle sorte que la couche de gomme de caoutchouc naturelle soit située entre le revêtement externe et le corps ;
dans lequel la couche de liaison est couplée au corps de telle sorte que le corps soit situé entre la couche de liaison et la couche de gomme de caoutchouc naturelle, et
dans lequel la couche de liaison comprend également un adhésif configuré pour coupler la couche de liaison à un composant d'aéronef, la couche de liaison étant en outre configurée pour coupler le dégivreur au composant d'aéronef.

9. Dégivreur selon la revendication 8, dans lequel chacun du premier revêtement externe et du second revêtement externe est formé à partir d'un même matériau et formé pour avoir une épaisseur comprise entre 2 millièmes de pouce (0,051 millimètre (mm)) et 40 millièmes de pouce (1,0 mm).

10. Dégivreur selon la revendication 8 ou 9, dans lequel le dégivreur comprend au moins l'un des éléments suivants :
un dégivreur pneumatique et le corps est configuré pour recevoir un gaz pour gonfler le dégivreur ; ou
un dégivreur électrothermique et le corps est configuré pour recevoir de l'électricité et convertir l'électricité en énergie thermique.
